Europäisches Patentamt

European Patent Office

Office européen des brevets

(11) Publication number: **0 250 595 B1**

# EUROPEAN PATENT SPECIFICATION

(45) Date of publication of patent specification: **24.02.93**   (51) Int. Cl.5: **B23B 27/14**, C04B 35/48

(21) Application number: **86905922.0**

(22) Date of filing: **27.09.86**

(86) International application number:
**PCT/JP86/00497**

(87) International publication number:
**WO 87/01980 (09.04.87 87/08)**

(54) **FINISH CUTTING TOOL AND FINISH CUTTING METHOD FOR STEEL.**

(30) Priority: **27.09.85 JP 212694/85**

(43) Date of publication of application:
**07.01.88 Bulletin  88/01**

(45) Publication of the grant of the patent:
**24.02.93 Bulletin  93/08**

(84) Designated Contracting States:
**DE FR GB IT SE**

(56) References cited:
EP-A- 1 359 9        DE-A- 3 408 096
JP-A-57 205 374      JP-A-58 185 477
JP-A-59 162 173      JP-B- 589 784
JP-B- 4 120 802

CHEMICAL ABSTRACTS, vol. 88, no. 6, 6th
February 1978, page 192, abstract no. 40786j,
Columbus, Ohio, US; N. NARUTAKI et al.:
"Effect of small quantity inclusions in steels
on the wear of ceramic tools", & BULL. JPN.
SOC. PRECIS. ENG. 1977, 11(3), 121-6

(73) Proprietor: **NIPPON STEEL CORPORATION**
**6-3 Otemachi 2-chome Chiyoda-ku**
**Tokyo 100(JP)**

(72) Inventor: **ITO, Kametaro Nippon Steel Cor-**
**poration**
**6-3, Otemachi 2-chome Chiyoda-ku**
**Tokyo 100(JP)**
Inventor: **SUZUKI, Nobukazu Nippon St. Corp.**
**R&D Lab.-II**
**10-1, Fuchinobe 5-chome Sagamihara-shi**
**Kanagawa 229(JP)**
Inventor: **KATAYAMA, Sakae Nippon St. Corp.**
**R&D lab.-II**
**10-1,Fuchinobe 5-chome Sagamihara-shi**
**Kanagawa 229(JP)**
Inventor: **KUBO, Hiroshi Nippon St. Corp. R&D**
**Laboratories-I**
**1618, Ida, Nakahara-ku**
**Kawasaki-shi,Kanagawa 211(JP)**

CHEMICAL ABSTRACTS, vol. 98, no. 20, 16th May 1983, page 256, abstract no. 164955q, Columbus, Ohio, US; R. MILOVIC et al.: "The machining of low carbon free cutting steels with high speed steel tools", & J. APPL. METALWORK, 1983 2(4), 249-57

CHEMICAL ABSTRACTS, vol. 89, no. 14, 2nd October 1978, page 372, abstract no. 115336u, Columbus, Ohio, US; K. OHGO et al.: "Peeling of the built-up edge of a cutting tool during the machining of a free cutting steel and its effect on tool life", & WEAR 1977, 45(3), 365-74

Inventor: IMAI,Tatsuya Nippon St. Corp. R&D Laboratories-II
10-1, Fuchinobe 5-chome Sagamihira-shi Kanagawa229(JP)
Inventor: SATO,Toyohiko Nippon St. Corp. R&D Laboratories-I
1618, Ida, Nakahara-ku Kawasaki-shi Kanagawa 211ag(JP)

(74) Representative: Arthur, Bryan Edward et al Withers & Rogers 4 Dyer's Buildings Holborn London EC1N 2JT (GB)

## Description

The present invention relates to a method for finish machining a steel, more particularly to a machining tool for sulfur-containing steel which suppresses the built-up edge formed on the cutting edge of the tool upon finish machining of a sulfur-containing steel, to obtain a finish machined surface having excellent characteristics.

BACKGROUND ART

To impart the free cutting property to steel, usually a means of adding sulfur alone or adding sulfur plus lead, tellurium, and other free-machining elements in a composite form has been adopted. The resultant sulfur-containing steel is widely used for small parts relatively not requiring strength and toughness. These are often used as engagement parts and thus emphasis is on the surface roughness of the finish machining and the dimensional accuracy.

Sulfur-containing steel has a lower cutting resistance than ordinary steel, and thus the heat built-up during cutting is small and the tool life is longer, advantages which are widely and generally recognised. However, sulfur causes an enlargement of the formation range of the so-called built-up edge, wherein a part of the machined material coheres to the tool and is work hardened to generate a build-up amounting to a height of from 50 to 100 $\mu$m, toward the high-speed machining side, which degrades the surface roughness of the finish machining, as is well known.

For example, in the August 15, 1961 issue of the Report of the Mechanical Engineering Laboratory of the Ministry of International Trade and Industry of Japan, No.43, page 57, it was reported that when 0.33 percent sulfur steel was machined by a high-speed steel tool (SKH3), a built-up edge was formed up to a maximum 125 m/min, and with light machining with a small feed of a 0.1 mm/rev, was formed up to a maximum 175 m/min.

Note, the machining speed for finish machining the sulfur-containing steel is usually approximately from 20 m/min to 100 m/min and, therefore, adjusting the machining speed as a measure against a built-up edge is not effective.

Further, in the Proceedings of the Spring 1985 Conference of the Academy of Precision Machinery of Japan (issued March 28, 1985), pages 585 to 586, it was reported that when an automatic screw machine and high-speed steel cutting tool were used to cut sulfur-phosphorus free-machining steel, the roughness of the finish surface was about Rz = 20 $\mu$m, one reason for this being the built-up edge.

For machining tools for sulfur-containing steel, use is primarily made of high-speed steel tools and cemented carbide tools, but use is also made of $Al_2O_3$ ceramic, cermet with TiC sintered by Ni, etc. These tools all form built up edges through cohesion with the steel of the machined material under the machining temperature and stress of the tool edge. The built-up edge transfers to the finish machined surface and degrades the surface roughness of the finish machining.

The recently developed TiN coating tools feature small degrees of cohesion with steel and a small formation of built-up edges, so a small roughness of the finish machined surface is obtained, but suffer from a defect in that the tools cannot be reground for reuse, and thus have not become widely used as tools for the finish machining of sulfur-containing steel.

To suppress the built-up edge and improve the surface roughness of the finish machining, it is necessary to take measures from the viewpoint of the metallurgical factors of the steel, but these are limited. Therefore, there has been a strong demand from industry for the development of a machining tool for sulfur-containing steel resistant to adhesion of a built-up edge and able to be reground.

Recently, as a method for producing sulfur-containing steel, in addition to casting in an ingot-mould, the continuous casting method has been employed. Since the cooling speed in the continuous casting is greater than that of the conventional ingot-mould casting method, the manganese sulfide in steels is liable to be refined, and thus the machinability is degraded, as reported, for example, in Japanese Unexamined Patent Publication No.59-205453.

The built-up edge is formed on the rake face of a tool during the first grinding for degrading the roughness of finish machined surface and is then exfoliated onto the finished surface. The nonformation of a built-up edge is the most effective counter-measure for improving the roughness of the finish machined surface. It is reported that, as a concrete counter-measure therefor, a size enlargement of the manganese sulfide in steel is effective. For example, in Tetsuto-Hagane 1986, No.5, page 242, it is reported that, within a range of from 50 to 200 $\mu$m$^2$/piece of manganese sulfide in the steel, the roughness of the finished surface (Rz according to JIS designation) becomes smaller as the average cross section area of the manganese sulfide becomes greater. However, the average cross sectional area of the manganese sulfide of sulfur-containing steel produced by the continuous casting method is smaller than that of free-cutting steel produced by casting into an ingot-mould, and is usually from 10 to 120 $\mu m^2$/piece. The continuous casting necessitates water cooling, and the cooling speed is greater than that of the casting method in an ingot-mould. Accordingly, the growth of manganese sulfide crystallized in the solidification procedure cannot be expected. A method for enlarging the average cross sectional area of manganese sulfide in the steel is not as effective as a practical countermeasure for improving the finish machined surface of continuously cast steel.

As described above, in machining the sulfur-containing steel, there has been no actually effective proposal for suppressing the formation of a built-up edge on the rake face of a tool and improving the roughness of a finish machined surface. It is strongly desired in the industry to develop a machining method whereby the built-up edge is not formed and an improved finish machined surface with a small roughness of the finish surface can be obtained in the ordinary machining speed range used in a factory, particularly for machining the sulfur-containing free cutting steel which has undergone the continuous casting process.

It is an object of the present invention to provide a novel machining method, in which the built-up edge is not formed on the rake face of a tool, and an improved finish machined surface with a small finish surface roughness can be obtained in the ordinary speed range for machining sulfur-containing free cutting steel.

It is known from DE-A 3408096 to provide a material for a cutting tool, the material comprising a sintered zirconium dioxide product including $ZrO_2$ and $CeO_2$.

The present inventors made various studies, and as a result, noticed that it was possible to restrain the formation of a built up edge by including, in the tool, elements with a strong chemical affinity to the [S] of manganese sulfide present in the steel, so as to form a coating of manganese sulfide on the tool surface, this coating of manganese sulfide suppressing the cohesion between the steel and tool.

The present inventors made further investigations, and as a result, found that, when a steel containing a determined amount of sulfur in the form of manganese sulfide is finish machined by a tool containing an element (Zr) with a high chemical affinity with an [S] of the manganese sulfide, the manganese sulfide in the steel is bonded with the Zr oxide in the tool, under the temperature and pressure of a tool edge during the finish machining, irrespective of the size of the manganese sulfide, with the result that the manganese sulfide coating is formed on the rake face of a tool in contact with the steel, which manganese sulfide coating has a function of preventing the cohesion of steel and tool and thus suppressing the formation of a built-up edge. As a result, a method for finish machining sulfur-containing free cutting steel to obtain an excellent finished surface was successfully developed, and thus the present invention was completed.

The present invention provides a method for finish machining steel as defined in claim 1.

The present invention is now described in detail.

In order to satisfactorily form a manganese sulfide coating on the rake surface of a tool during the finish machining, it is necessary to ensure a determined amount of the manganese sulfide in the steel, which is the source of supply of the coating. Therefore, it is necessary to contain S, which is usually an impurity, as a component of the free-cutting steel, in an amount essentially exceeding the unavoidably incorporated amount.

Sulfur-containing steel means steel containing at least 0.05 percent by weight of sulfur and containing an amount of manganese for stoichiometrically fixing the sulfur as a manganese sulfide. Of course, Pb, Te, Se, P, N and other free cutting elements also may be contained.

The upper limit of S is preferably 0.4% or less because the cold-workability of steel is impaired by an amount in excess of 0.4%.

The content of Mn is preferably 0.5% or more, in the light of forming the manganese sulfide base inclusions and preventing the precipitation of FeS in the grain boundaries of steel, to prevent cracking during hot-rolling. However, an amount in excess of 1.2% enhances the cutting resistance of steel and lessens tool wear. Therefore, preferably, the content is 1.2% or less.

In addition, to further enhance the machinability including an improvement of the feasibility of treating the chips and a suppression of a temperature rise at a tool edge due to a decrease in the cutting resistance, one kind or two kinds or more of 0.02 to 0.40% of Pb, 0.02 to 0.20% of Bi, and 0.01 to 0.10% of Te, known as free-cutting elements, may be added. Other components are 0.05 to 0.50% of C, 0.001 to 0.35% of Si, and 0.005 to 0.10% of P, the balance being iron and unavoidable impurities.

The sulfur-containing steel may be produced through the ordinary ingot cast process or the continuous casting process.

The sulfur-containing free cutting steel is usually produced by the continuous casting process. The size of a bloom of such steel is from 100 x 100 $mm^2$ to 400 x 600 $mm^2$. The relative water amount is from 1 $\ell$ /kg. steel to 2 $\ell$ /kg.steel. The average cross sectional area of MnS in the steel after a hot-rolling of such bloom lies in the range of from 10 to 120 $\mu m^2$ /piece. This average cross sectional area of MnS was measured by using an optical microscope at a magnification of 200 with regard to the manganese sulfide included in a 1mm square section in the rolling direction of the steel material. In the measurement, minute manganese sulfide 5 $\mu m^2$ or less was excluded.

When the average cross sectional area of MnS exceeds 120 $\mu m^2$/piece, the surface finishing obtained becomes approximately identical to that obtained by finish machining with ordinary tools (high speed steel and cemented carbide). In this case, the superiority of the finish machining method according to the present invention to that by the ordinary tools is reduced. The finish machining method according to the present invention is advantageous at the average cross sectional area of MnS of 120 $\mu m^2$/piece or less, comprehensively taking into consideration other evaluation items including the cost of a tool.

When the hot-rolled steel material, which has undergone the continuous casting process and in which the average cross sectional area of MnS lies in the range of from 10 to 120 $\mu m^2$/piece, is machined by the method according to the present invention, the obtained roughness of the finish machined surface is Rz $\leq$ 10 $\mu m$, which is outstandingly better than the Rz $\leq$ 20 ~ 30 $\mu m$ obtained by ordinary tools (high speed steels and cemented carbide).

Lastly, the finish machining tool is described. The lower limit of zirconium oxide ($ZrO_2$) is set as 50% so as to ensure the Zr which is necessary to react with the manganese sulfide in the steel. $ZrO_2$ may be essentially the entire component of the tool. As residual component(s) of $ZrO_2$, one or two or more kinds selected from the group consisting of aluminum oxide ($Al_2O_3$), magnesium oxide (MgO), yttrium oxide ($Y_2O_3$), calcium oxide (CaO), neodyum oxide, and cerium oxide (CeO) may be included in an appropriate amount, to enhance the toughness of the $ZrO_2$. The upper limit of the respective component is, for example, 20 mole%.

When the sulfur-containing steel described above is machined by a machining tool containing Zr according to the present invention, MnS in the steel is plastically deformed under the high temperature and high pressure of a tool edge and is further caused to react with the Zr in the tool, and the film-form coating of MnS is formed on the rake face of tool. This coating covers from 30 to 90% of the contact region of tool and chips and sufficiently suppresses the adhesion of Fe (machined material), and thus the built-up edge is not formed. When the sulfur-containing steel, which was produced through a continuous casting process and in which the average cross sectional area of manganese sulfide was 40 $\mu m^2$/piece, was machined by the $ZrO_2$ tool and a high speed steel-tool, and the edges of tools then analyzed by EPMA analysis, it was revealed that the edge of $ZrO_2$ tool was covered by a film-form coating of MnS and the built-up edge was not formed, but the edge of a high speed steel-tool was clearly covered by a built-up (Fe) edge. It was, therefore, discovered that the problem of the built-up edge, which could not be previously solved, could be completely solved by the method according to the present invention.

The steel having the composition according to the present invention is cast to obtain a slab by continuous casting or ingot casting under an ordinary casting condition. The slab is heated to a rolling temperature by using a heating furnace. The hot-rolling is carried out to produce a bar or a bar-in coil, which is then transferred to a machining process. Occasionally, the annealing or drawing process may be carried out and the bar or the like then transferred to a machining process.

The tip of a zirconium-containing tool is produced by primarily shaping the powder of $ZrO_2$ or the like, pressure-shaping (CIP), and then sintering in air (1400 - 1700°C, 1 - 4 hours), followed by grinding. The tool herein means a tip, which has a so called throw-away edge of the constituent material of the tool, which is discarded after use; a forming tool; an edge of the solid tool; or at least an edge part of an existing tool, into which part of the constituent material is diffused, bonded, or melt-sprayed.

In the machining process, the rough machining is carried out by using a high speed steel-tool and a cemented carbide tool, and finish machining is carried out at a machining speed of approximately 100 m/min or less by a ceramics tool containing Zr according to the present invention, thereby making it possible to obtain an extremely smooth machined surface with an average surface finish roughness of from 4 to 7 $\mu m$.

The effects of the present invention are hereinafter described with reference to examples.

BESTMODE FOR CARRYING OUT THE INVENTION

Example 1

Low carbon-resulfurized-leaded-machining steel equivalent to AISI 12L14 was subjected to lathe test in a direction perpendicular to the axis of rotation using a cutting-off type tool with an edge shape of a top rake angle of 20°, a front relief angle of 6°, and a tool width of 5 mm. The cutting speed was 60 m/min, the

EP 0 250 595 B1

feed 0.05 mm/rev, and the cutting cycle 2 seconds cutting and 5 seconds noncutting.

The manganese sulfide coating and built-up edge formed on the tool edge were observed by an optical microscope. The former was evaluated by the proportion of the area of the manganese sulfide coating with respect to the tool-chip contact area, and the latter by the presence or absence of the formation. The roughness of the finished surface is expressed in Rz (JIS) as the value at a cutting cycle of 800.

As clear from Table 1, in the case of cutting by a tool of the present invention, the manganese sulfide coating occupies 89 to 95 percent of the tool-chip contact region, so that a build-up edge is not formed and the roughness of the finished surface is small, providing that the tool of the present invention is superior.

Note, 10 mole% or less of CeO, 3 mole% or less of $Y_2O_3$, and 10 mole% or less of MgO are contained in 1, 2, and 3, respectively.

Table 1

| | Tested Tools | | Area percentage of manganese sulfide film (%) | Built-up edge | Roughness of finished surface (Rz) (um) |
|---|---|---|---|---|---|
| Invention | Throw away tip | 1 $ZrO_2$ tool | 92 | no | 4.8 |
| | | 2 Partially stabilized $ZrO_2$ tool | 94 | no | 6.1 |
| | Brazed tool | 3 $ZrO_2$ tool | 89 | no | 5.5 |
| Comparative | Throw away tip | 4 $Al_2O_3$ ceramics tool | 0 | yes | 29.3 |
| | | 5 thermet | 0 | yes | 27.4 |

Example 2

In Table 2, the effects of the machining method according to the present invention are shown in comparison with those of the comparative machining method. The tools were shaped in the form of a throw away chip, then sintered and used. The steel samples are hot-rolled steel materials produced through the continuous casting process.

6

The testing method is as follows: a cutting-off type tool with an edge shape of a top rake angle of 20°, a front relief angle of 6°, and a tool width of 5 mm, was used at a cutting speed of 60 m/min, a feed 0.05 mm/rev, and a cutting cycle 2 seconds cutting and 5 seconds noncutting.

The roughness of a finish machined surface (JIS designation Rz) and the flank wear of a tool (JIS designation VB), measured at 800 machining cycles, were employed for the evaluation criteria.

As is apparent from Table 2, the finish machining method according to the present invention forms an excellent surface finish with an average surface finish roughness (Rz) of from 7.4 μm or less, and provides a small tool wear. On the other hand, in Samples Nos.5 and 6 according to the comparative machining method, the roughness of a finish machined surface is poor because of the formation of a built-up edge. The roughness of a finish machined surface is poor for Sample No.7 with a low sulfur content, even when finish machined with a Zr-containing tool.

Table 2

| | Steel | | | | Tool | | Rough-ness of Finished Surface (μm) | Flank Wear (μm) |
|---|---|---|---|---|---|---|---|---|
| Sample No. | S (%) | Mn (%) | Additive Element | MnS Average Cross-Sectional Area (μm²/piece) | ZrO₂ Series | SKH57, P20 | | |
| Invention 1 | 0.06 | 0.99 | – | 45 | $ZrO_2 + 3\% Al_2O_3$ | – | 4.5 | 45 |
| 2 | 0.15 | 0.55 | – | 15 | $ZrO_2 + 3\% Y_2O_3$ | – | 4.8 | 38 |
| 3 | 0.29 | 0.86 | 0.2% Pb | 32 | $ZrO_2 + 3\% MgO$ | – | 4.2 | 43 |
| 4 | 0.28 | 0.95 | 0.1% Bi 0.03% Te | 73 | $ZrO_2 + 30\% Al_2O_3$ | – | 4.7 | 41 |
| Comparative 5 | 0.015 | 0.85 | – | 110 | – | SKH57 | 32.5 | 110 |
| 6 | 0.15 | 0.83 | – | 108 | – | P20 | 21.5 | 75 |
| 7 | 0.001 | 0.60 | – | – | $ZrO_2 + 3\% Al_2O_3$ | – | 22.5 | 120 |
| 8 | 0.33 | 1.12 | – | 60 | $30\% ZrO_2$ $70\% Al_2O_3$ | – | 18.3 | 185 |

**Claims**

1. A method of finish machining steel, characterized in that the steel is a hot-rolled steel material which contains, by weight %, from 0.5 to 1.2% of Mn and from 0.05 to 0.4% of S, the sulphur being present as manganese sulphide having an average cross-sectional area after hot rolling of from 10 to 120 $\mu m^2$/piece, and the finish machining is carried out by means of a ceramics tool containing 50 mole% or more of zirconium oxide, whereby a coating film of MnS is formed during the finish machining and the formation of a built-up edge consisting of said steel material on the tool is suppressed.

2. A method of finish machining steel according to Claim 1, wherein said steel contains one or two or more components selected from the group consisting of 0.02 to 0.40% of Pb, 0.02 to 0.20% of Bi, and 0.01 to 0.10% of Te.

3. A method of finish machining steel according to any preceding claim, wherein the hot-rolled steel is produced through continuous casting.

4. A method of finish machining steel according to any preceding claim, wherein the machining speed is approximately 100 m/min or less.

5. A method of finish machining steel according to any preceding claim, wherein the remainder of the zirconium oxide is constituted by one or two or more components selected from the group consisting of aluminum oxide, magnesium oxide, yttrium oxide, calcium oxide, and cerium oxide.

**Patentansprüche**

1. Verfahren zum Endbearbeiten von Stahl, dadurch gekennzeichnet, daß der Stahl ein warmgewalztes Stahlmaterial ist, welches 0.5 bis 1.2 % Mn und 0.05 bis 0.4 % S (Angaben jeweils in Gew.-%) enthält, wobei der Schwefel als Mangansulfid mit einer durchschnittlichen Querschnittsfläche nach dem Warmwalzen von 10 bis 120 $\mu m^2$/Teil vorliegt, und das Endbearbeiten mittels eines Keramikwerkzeugs durchgeführt wird, welches mindestens 50 Mol-% Zirkonoxid enthält, wodurch ein Beschichtungsfilm aus MnS während des Endbearbeitens ausgebildet wird und die Ausbildung einer aus dem Stahlmaterial bestehenden Aufbaukante auf dem Werkzeug unterdrückt wird.

2. Verfahren zum Endbearbeiten von Stahl gemäß Anspruch 1, wobei der Stahl einen oder zwei oder mehrere Bestandteile enthält, die aus der aus 0.02 bis 0.40 % Pb, 0.02 bis 0.20 % Bi und 0.01 bis 0.10 % Te bestehenden Gruppe ausgewählt sind.

3. Verfahren zum Endbearbeiten von Stahl gemäß einem der vorhergehenden Ansprüche, wobei der warmgewalzte Stahl durch Stranggießen hergestellt wird.

4. Verfahren zum Endbearbeiten von Stahl gemäß einem der vorhergehenden Ansprüche, wobei die Bearbeitungsgeschwindigkeit höchstens etwa 100 m/min beträgt.

5. Verfahren zum Endbearbeiten von Stahl gemäß einem der vorhergehenden Ansprüche, wobei das Keramikwerkzeug außer dem Zirkonoxid einen oder zwei oder mehrere Bestandteile enthält, die aus der aus Aluminiumoxid, Magnesiumoxid, Yttriumoxid, Calciumoxid und Ceroxid bestehenden Gruppe ausgewählt sind.

**Revendications**

1. Procédé d'usinage de finition de l'acier, caractérisé en ce que l'acier est un matériau d'acier laminé à chaud qui contient, en pourcentage pondéral, de 0,5 à 1,2 % de Mn et de 0,05 à 0,4 % de S, le soufre étant présent à l'état de sulfure de manganèse ayant une surface de section transversale moyenne après laminage à chaud de 10 à 120 $\mu m^2$/pièce, et en ce que l'usinage de finition est effectué au moyen d'un outil de céramique contenant 50 moles % ou davantage d'oxyde de zirconium, de telle sorte qu'il se forme au cours de l'usinage de finition un film de revêtement de MnS et que la formation sur l'outil d'une arête rapportée constituée de ce matériau d'acier est supprimée.

2. Procédé d'usinage de finition de l'acier selon la revendication 1, dans lequel cet acier contient un ou deux, ou plus de deux constituants choisis dans le groupe formé par 0,02 à 0,40 % de Pb, 0,02 à 0,20 % de Bi et 0,01 à 0,10 % de Te.

3. Procédé d'usinage de finition de l'acier selon l'une quelconque des revendications précédentes, dans lequel l'acier laminé à chaud est produit par coulée continue.

4. Procédé d'usinage de finition de l'acier selon l'une quelconque des revendications précédentes, dans lequel la vitesse d'usinage est d'environ 100 m/minute ou moins.

5. Procédé d'usinage de finition de l'acier selon l'une quelconque des revendications précédentes, dans lequel le reste de l'oxyde de zirconium est constitué d'un ou deux, ou plus de deux constituants choisis parmi l'oxyde d'aluminium, l'oxyde de magnésium, l'oxyde d'yttrium, l'oxyde de calcium et l'oxyde de cérium.